# EUROPÄISCHE PATENTSCHRIFT

(11) **EP 1 036 796 B1**
(45) Veröffentlichungstag und Bekanntmachung des Hinweises auf die Patenterteilung: **25.09.2002**
(21) Anmeldenummer: 00103428.9
(22) Anmeldetag: 25.02.2000
(51) Int. Cl.: C07F 9/6568

(54) **Verfahren zur Herstellung von Phosphabenzolverbindungen**
Method for producing phosphabenzene compounds
Procédé de préparation de composés phosphabenzene

(30) Priorität: 17.03.1999 DE 19911922
(43) Veröffentlichungstag der Anmeldung: 20.09.2000
(73) Patentinhaber: BASF AKTIENGESELLSCHAFT, 67056 Ludwigshafen (DE)
(72) Erfinder: Mackewitz, Thomas Dr., 68219 Mannheim (DE); Roeper, Michael, Dr., 67157 Wachenheim (DE); Breit, Prof. Dr. Bernhard, 69198 Schriesheim (DE)
(74) Vertreter: Isenbruck, Günter, Dr.

(56) Entgegenhaltungen:
- WO-A-97/46507
- WO-A-99/16774
- DE-A- 1 668 416

## Beschreibung

Phosphabenzolverbindungen können als Liganden in Übergangsmetallkomplexen eingesetzt werden, die bei der Hydroformylierung von Olefinen Verwendung finden.

In der DE-A 196 21 967 sind entsprechende Komplexe und Verfahren zu ihrer Herstellung beschrieben. Gemäß einer Verfahrensvariante kann Bis- 3,3'(2,4,6-Triphenylphosphabenzol)-1,1'diphenyl durch Umsetzung des entsprechenden Pyryliumsalzes mit Phosphorwasserstoff hergestellt werden.

In der DE-A-16 18 668 ist ein Verfahren zur Herstellung von substituierten Phosphabenzolen beschrieben, bei dem Pyryliumsalze mit Trishydroxymethylphosphin, Tetrahydroxymethylphosphinchlorid oder Tetrahydroxymethylphosphinhydroxid umgesetzt werden. Die Phosphinverbindungen sind schwierig darstellbar, und das Verfahren ist unwirtschaftlich.

In F. Lieb, "Synthesen und Reaktionen von Phosphorinen, Untersuchungen zur Darstellung von Systemen mit Arsen-Kohlenstoff-Doppelbindungen", Inaugural-Dissertation, Würzburg, 1969, Seiten 106 und 107 ist ein Verfahren zur Herstellung von 2,4,6-Triphenylpyrylium-tetrafluoroborat in n-Butanol bei einer Temperatur von ―78°C beschrieben, bei dem in Gegenwart einer katalytischen Menge an Säure (Essigsäureanhydrid/HBr) oder von CaCO₃ das sich im Verdünnungsmittel löst, als Base mit PH₃ umgesetzt wird. Nach Verschließen des Reaktionsgefäßes wird für 41 Stunden bei einer Temperatur von 110°C unter Eigendruck umgesetzt. Der Einsatz von Basen führt zu einem Salzanfall, der weitere Abtrennungsschritte erforderlich macht.

In der DE-A-16 68 416 sind Phosphabenzole und Verfahren zu ihrer Herstellung durch Umsetzung von substituierten Pyryliumsalzen mit Phosphorwasserstoff beschrieben. Die Umsetzung findet dabei in einem Glasautoklaven statt, in dem Phosphorwasserstoff erst nach dem Verschließen aus Phosphoniumiodid gebildet wird. Alternativ wird Phosphorwasserstoff in den Reaktor einkondensiert, wobei die Siedetemperatur des Phosphorwasserstoffs von ―87°C unterschritten werden muß. Die Umsetzung erfolgt daraufhin wiederum in einem Autoklaven.

Das Verfahren der Umsetzung unter Eigendruck hat den Nachteil, daß sich die Konzentration der Reaktanten ständig ändert und lange Umsetzungszeiten erforderlich sind, das Einführen von PH₃ bei einer Temperatur von ―78°C setzt den Einsatz entsprechender Kühlvorrichtungen voraus. Die Verfahrensführung im abgeschlossenen Reaktionsgefäß ist schwer oder nicht kontrollierbar.

In der prioritätsälteren, nicht vorveröffentlichten DE-A-197 43 197 werden die beschriebenen Nachteile teilweise vermieden durch ein Verfahren, bei dem Pyryliumsalze mit Phosphorwasserstoff in Gegenwart einer katalytischen Menge Säure und in Anwesenheit oder Abwesenheit eines Löse- oder Verdünnungsmittels umgesetzt werden. Die Pyryliumsalze werden dabei mit Phosphorwasserstoff oberhalb von 0°C zusammengebracht und bei einer Temperatur oberhalb von 0°C bis 200°C und einem Druck oberhalb von 1 bar umgesetzt. Vorzugsweise werden die Pyryliumsalze bei Umgebungstemperatur mit Phosphorwasserstoff zusammengebracht, und das so erhaltene Gemisch wird zur Umsetzung auf eine Temperatur im Bereich von 110 bis 130°C erhitzt. In dem beschriebenen Verfahren werden katalytische Mengen an Säure eingesetzt. Als Säurekatalysatoren werden Mineralsäuren wie HCI, HBr oder HI verwendet.

Derartige freie Mineralsäuren können jedoch metallgefertigte Autoklaven, Druckbehälter oder andere Reaktionsbehälter durch Korrosion schädigen. Darüber hinaus besteht die Gefahr, daß das Wertprodukt mit Holgenidionen verunreinigt wird. Bei Verwendung von Phosphabenzolen als Co-Katalysatoren können sich derartige Verunreinigungen auch in Spuren störend auf die Katalysatoreigenschaften auswirken.

Aufgabe der vorliegenden Erfindung ist die Bereitstellung eines Verfahrens zur Herstellung von Posphabenzolverbindungen, das wirtschaftlich durchführbar ist und die Nachteile der bekannten Verfahren vermeidet.

Die Aufgabe wird erfindungsgemäß gelöst durch ein Verfahren zur Herstellung von Phosphabenzolverbindungen der allgemeinen Formeln I und II 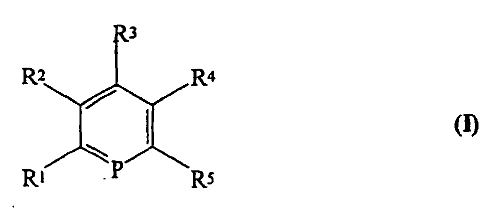 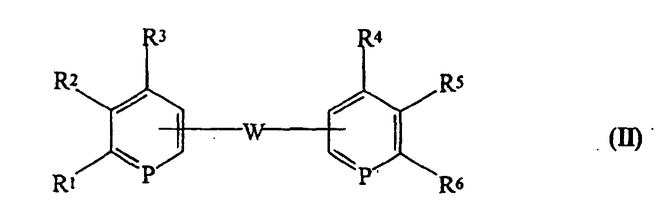 in denen R¹ bis R⁶ unabhängig voneinander für Wasserstoff, COOM, SO₃M, NR₃X, NR₂, OR, COOR oder SR (mit M=Wasserstoff, NH₄ oder Alkalimetall, X = Anion, R = Wasserstoff oder C₁₋₆-Alkyl) oder für C₁₋₁₂-Alkyl, C₆₋₁₂-Aryl, C₇₋₁₂-Aralkyl, C₇₋₁₂-Alkaryl oder C₃₋₆-Heterocycloalkyl mit 1 bis 3 Heteroatomen stehen, die mit den vorstehenden Resten substituiert sein können, wobei auch zwei oder mehrere der Reste zu aliphatischen oder annellierten Ringen verbunden sein können,
und
W eine Brücke aus einer kovalenten Bindung, einer Oxogruppe, einer Schwefelgruppe, einer Aminogruppe, einer Di-C₁₋₆-alkylsiliziumgruppe oder einem C₁₋₁₆-Rest bedeutet, der Bestandteil einer oder mehreren verknüpfter cyclischer oder aromatischer Kerne sein kann und durch 1 bis 3 Heteroatome unterbrochen sein kann wobei die jeweils nicht an die Brücke gebundene o- oder m-Position der Phosphabenzolkerne einen der Reste R¹ bis R⁶ tragen kann, durch Umsetzung entsprechender Pyryliumsalze mit PH₃ in Anwesenheit oder Abwesenheit eines Löse- oder Verdünnungsmittels. Das erfindungsgemäße Verfahren ist dadurch gekennzeichnet, daß die Pyryliumsalze mit PH₃ bei einer Temperatur oberhalb von 0°C zusammengebracht und bei einer Temperatur von 0°C bis 200°C und einem Druck von oberhalb 1 bar ohne Zusatz eines Säurekatalysators oder einer Base umgesetzt werden. Durch den Verzicht auf den Zusatz eines Säurekatalysators oder einer Base kann das Verfahren vereinfacht und noch wirtschaftlicher gemacht werden.

Gemäß einer Ausführungsform ist Bis-3,3'(2,4,6-triphenylphosphabenzol)-1,1'diphenyl ausgenommen.

Es wurde erfindungsgemäß gefunden, daß Phosphabenzolverbindungen der vorstehenden allgemeinen Formeln durch Umsetzung der entsprechenden Pyryliumsalze, d. h. Verbindungen, in denen in den allgemeinen Formeln I und II anstelle von Phosphor O⁺ mit entsprechendem Gegenion vorliegt, mit PH₃ erhältlich sind, wenn bestimmte Verfahrensbedingungen eingehalten werden. Die Pyryliumsalze sind dabei technisch erhältlich oder können einfach hergestellt werden. PH₃ ist technisch verfügbar.

Auch bei Verzicht des Zusatzes eines Säurekatalysators, insbesondere einer Mineralsäure, kann das Verfahren in unverändert hohen oder sogar höheren Ausbeuten durchgeführt werden.

Aus dem nach der Umsetzung erhaltenen Produktgemisch kann die dem Anion des Pyryliumsalzes entsprechende freie Säure durch wässrige Extraktion abgetrennt und in die Herstellung des Pyryliumsalzes zurückgeführt werden. Die bei der Extraktion mit Wasser erhaltene wässrige Lösung von beispielsweise Tetrafluoroborsäure kann vor der Rückführung gegebenenfalls isoliert werden. Die wässrige Lösung enthält keine Verunreinigungen durch Mineralsäuren.

Die Umsetzung erfolgt dabei vorzugsweise bei einem PH₃-Partialdruck im Bereich von 0,1 bis 100 bar, besonders bevorzugt von 5 bis 35 bar, insbesondere 20 bis 30 bar. Der Gesamtdruck im System hängt vom jeweiligen Lösungsmittel ab. Durch Aufpressen von PH₃ oder Inertgas kann der Gesamtdruck erhöht werden.

Vorzugsweise wird während der Umsetzung PH₃ in das Reaktionsgemisch eingeleitet, um den PH₃-Partialdruck im wesentlichen konstant zu halten. Diese Vorgehensweise erlaubt eine besonders wirtschaftliche und schnelle Umsetzung zu den gewünschten Phosphabenzolverbindugnen. Dabei werden hohe Produkteinheiten und Umsätze erzielt. Das erfindungsgemäße Verfahren ist für eine Vielzahl von Produkten zuverlässig einsetzbar. Es kann kontinuierlich oder diskontinuierlich, vorzugsweise diskontinuierlich betrieben werden.

Bei einer besonders vorteilhaften Verfahrensvariante werden die Pyryliumsalze bei Umgebungstemperatur mit PH₃ zusammengebracht, und das so erhaltene Gemisch wird zur Umsetzung auf eine Temperatur im Bereich von 60 bis 140°C, bevorzugt 80 bis 130°C erhitzt.

Besonders bevorzugt beträgt die Temperatur bei der Umsetzung 100 bis 120°C. Die Umsetzung wird vorzugsweise in einem Autoklaven durchgeführt. Neben PH₃ kann zusätzlich ein Inertgas verwendet werden, mit dem der gewünschte Gesamtdruck eingestellt wird. Vorzugsweise wird jedoch nur PH₃ eingesetzt.

Die Umsetzung kann in Anwesenheit oder Abwesenheit eines Löse- oder Verdünnungsmittels durchgeführt werden. Vorzugsweise wird sie in Anwesenheit eines Löse- oder Verdünnungsmittels durchgeführt. Geeignete Löse- oder Verdünnungsmittel sind beispielsweise niedere aliphatische Alkohole, wie Methanol, Ethanol, n-Propanol, i-Butanol, i-Butanol, tert.-Butanol oder Pentanol-Isomere, vorzugsweise Ethanol, Propanol oder Butanole, insbesondere n-Butanol.

Nach der Umsetzung wird das Reaktionsgemisch vorzugsweise entspannt und gegebenenfalls mit einem Inertgas gespült, wobei die aus dem Reaktionsgemisch austretenden Gase zur Abtrennung von nicht umgesetztem PH₃ in flüssiger Form gekühlt und durch einen Abscheider geführt werden, und das abgetrennte PH₃ in die Umsetzung zurückgeführt wird.

Besonders wirtschaftlich und ökologisch unbedenklich ist somit ein Verfahren, bei dem PH₃ in einen Reaktor eingeleitet wird, die Reaktion durchgeführt wird, und der Gasstrom über eine weitere Leitung durch einen Kühler beliebiger Bauart geleitet wird, in dem das PH₃ auskondensiert wird. In einem nachfolgenden Abscheider beliebiger Bauart wird das PH₃ sodann abgetrennt und beispielsweise mit Hilfe einer Pumpe in die Umsetzung zurückgeführt. Um ein besonders PH₃armes Abgas zu erhalten, ist die Verwendung eines nachgeschalteten zweiten Kühlers und Abscheiders vorteilhaft. Um den Reaktorgasraum und die eingesetzten Apparaturen vollständig von PH₃ zu befreien, was wegen der Giftigkeit von PH₃ vorteilhaft ist, sollte eine Spülleitung für die Spülung mit einem Inertgas wie Stickstoff vorgesehen sein. Dabei sollte das Spülgas über die Kombination aus Kühler und Abscheider geleitet werden.

Die für die Umsetzung benötigte Zeit hängt von der Art des Pyryliumsalzes ab. Die Umsetzung wird je nach Pyryliumsalz vorzugsweise für einen Zeitraum von 1 bis 4 Stunden durchgeführt. Bei der Umsetzung in einem Lösungsmittel hängt die Konzentration an PH₃ im Lösungsmittel vom PH₃-Partialdruck und der Art des Lösungsmittels ab; insbesondere bei kontinuierlicher Reaktionsführung sollte eine hohe Konzentration an PH₃ im Lösungsmittel beibehalten werden.

Zum Erreichen hoher Umsätze in kurzer Reaktionszeit wird vorzugsweise mit hohen PH₃-Drucken und kontinuierlichem Nachpressen von PH₃ gearbeitet.

Im erfindungsgemäßen Verfahren kann eine Vielzahl unterschiedlicher Pyryliumsalze eingesetzt werden. Das Verfahren ist allgemein nicht auf bestimmte Verbindungsklassen eingeschränkt. Beispielsweise können die Pyryliumsalze Ferrate, Zinkate, Chloride, Borate, gegebenenfalls mit einem C₁₋₆-Alkylrest, Triflate, Trifluoracetate oder bevorzugt Tetrafluorborate, Perchlorate, Hydrogensulfate, Bromide, Iodide oder Gemische davon sein. Vorzugsweise werden Tetrafluorborate eingesetzt. Der organische Rest der erfindungsgemäß eingesetzten Pyryliumsalze wird nachstehend anhand der daraus hergestellten Phosphabenzolverbindungen näher beschrieben.

In den vorstehenden Verbindungen der allgemeinen Formel I sind die Reste R¹ bis R⁵ unabhängig voneinander Wasserstoff, COOM, SO₃M, NR₃X, NR₂, OR, COOR oder SR (mit M = Wasserstoff, NH₄ oder Alkalimetall, X = Anion, R = Wasserstoff oder C₁₋₁₆-Alkyl), oder C₁₋₁₂-Alkyl, C₆₋₁₂-Aryl, C₇₋₁₂Aralkyl, C₇₋₁₂-Alkaryl oder C₃₋₆-Heteroatomen, wobei die Alkyl-, Aryl-, Alkaryl- und Aralkylreste mit den davor genannten Resten substituiert sein können und zwei oder mehrere der Reste zu aliphatischen oder annelierten Ringen verbunden sein können. Die Reste R¹ bis R⁵ können dabei gleich oder unterschiedlich sein. Vorzugsweise handelt es sich bei R¹ bis R⁵ um Alkyl-, Aryl-, Alkaryl- oder Aralkylreste, die substituiert sein können.

Sind zwei oder mehrere der Reste zu aliphatischen oder annelierten Ringen verbunden, so kann es sich bei den Verbindungen beispielsweise um Phosphanaphthalin oder höhere aromatische Verbindungen handeln. Vorzugsweise handelt es sich bei den Resten um C₆₋₁₂-Arylreste, besonders bevorzugt Phenalreste, oder um C₇₋₁₂-Aralkylreste, besonders bevorzugt Benzylreste, oder C₇₋₁₂ Alkarylreste, besonders bevorzugt bei R¹ und R⁵ um 2-oder 2,6-Dialkylarylreste.

Besonders bevorzugt sind Verbindungen der allgemeinen Formel I, die in den Positionen 2, 6 und gegebenenfalls 4 durch gegebenenfalls substituierte Phenylreste substituiert sind. Insbesondere liegen in allen drei Positionen Phenylreste vor. Diese Reste weisen vorzugsweise keinen oder einen weiteren Substituenten auf. Bei den Substituenten in 4-Position handelt es sich vorzugsweise um einen Säure- oder Aminrest, gegebenenfalls in Salzform, der insbesondere in der para-Position vorliegt. Zudem kann in einer oder beiden der 2, 6-Positionen ein Benzylrest oder 2-Alykl-substituierter Phenylrest vorliegen.

In den Verbindungen der allgemeinen Formel II haben R¹ bis R⁶ die vorstehend angegebene Bedeutung. ―W- stellt eine Brücke aus einer kovalenten Bindung, einer Oxogruppe, einer Schwefelgruppe, einer Aminogruppe, einer Di-C₁₋₆alkylsiliziumgruppe oder einem C₁₋₁₆-, vorzugsweise C₁₋₆-Rest dar, der Bestandteil eines oder mehreren verknüpfter cyclischer oder aromatischer Kerne sein kann und durch 1 bis 3 Heteroatome unterbrochen sein kann, wobei die jeweils nicht an die Brücke gebundene o- oder m-Position der Phosphabenzolkerne einen der Reste R¹ bis R⁶ tragen kann.

Bei der Brücke W kann es sich beispielsweise um eine gegebenenfalls substituierte Methylengruppe der Formel CR⁷R⁸ handeln, in der R⁷ und R⁸ gleich oder unterschiedlich sein können und Wasserstoff oder Alkylreste mit insgesamt 1 bis 15 C-Atomen oder Phenylresten, wie auch Alkaryl- oder Aralkylreste sein können, sofern der Rest nicht mehr als 16 C-Atome aufweist.

Es kann sich bei -W- zudem um eine Oxagruppe (-O-), Schwefelgruppe (-S-), Di-C₁₋₆-alkylsiliziumgruppe (-Si(Alkyl)₂) oder eine Aminogruppe -NR⁹- handeln, wobei R⁹ C₁₋₆-Alykl, C₆₋₁₂-Aryl, C₇₋₁₅-Aralkyl, insbesondere Benzyl ist.

-W- kann einen oder mehrere verknüpfte cyclische oder auch aromatische Kerne aufweisen, besonders bevorzugt einen oder zwei cyclische oder aromatische Kerne. Beispielsweise kann W ein o-, oder p-Phenylenrest sein. Andere geeignete Reste sind Cycloalkyldiylreste, insbesondere Cyclopentyldiyl- und Cyclohexyldiyl-. Geeignete Aryldiylgruppen sind beispielsweise 1,1- Diphenyldiylreste, Naphthyl-diylreste, Diphenyletherdiylreste, Diphenylmethandiylreste, Diphenylethandiylreste, Diphenylpropandiylreste und Ferrocendiylreste. Beispiele geeigneter Phosphabenzolverbindungen sind in der bereits eingangs erwähnten DE-A 196 21 97 aufgeführt:

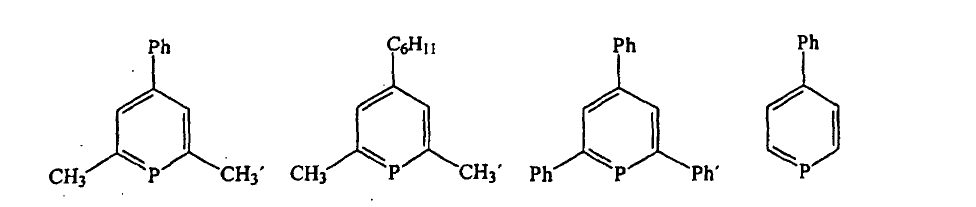

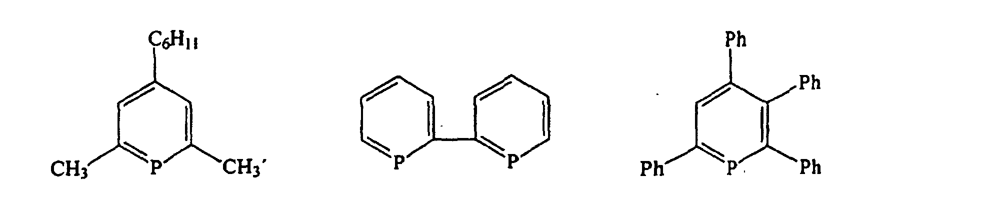

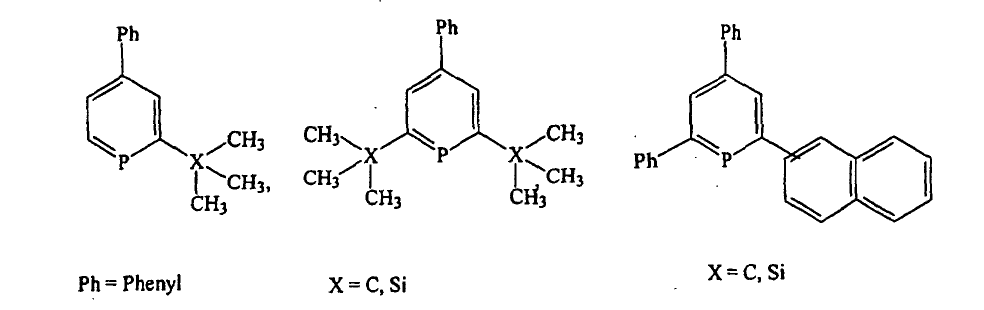

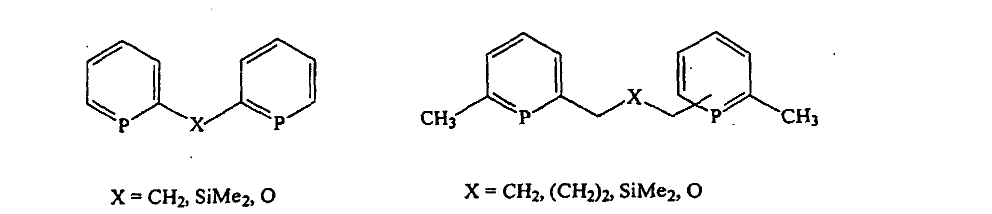

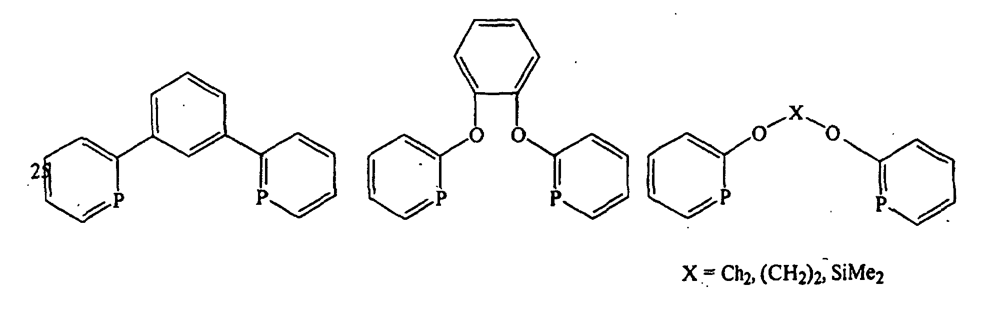

Die bei der direkten Umsetzung mit PH₃ eingesetzten Pyryliumsalze können beispielsweise nach Houben-Weyl, Hetarene II, Teil 2, Herausgeber R. Kreher, Band E7b, Seite 755 ff, Thieme Verlag, Stuttgart erhalten werden.

Weiterhin geeignete Phosphabenzolverbindungen sind:

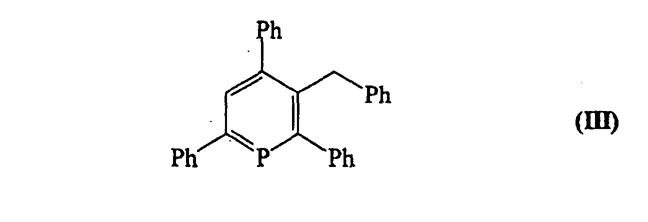

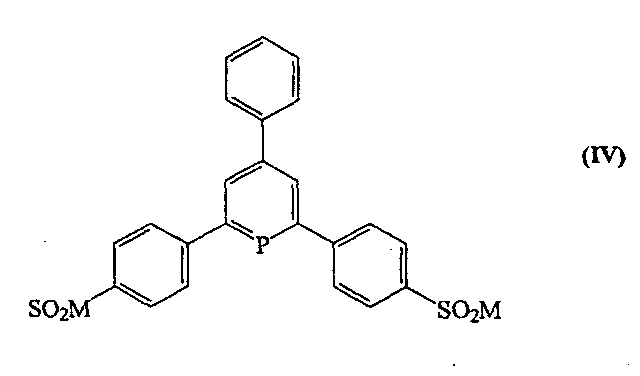

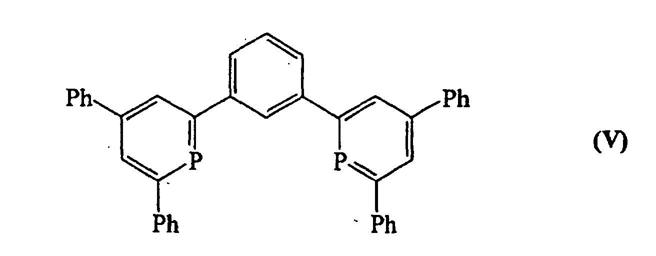

Die erfindungsgemäß hergestellten Verbindungen sind zur Herstellung von Komplexen mit Metallen der VIII Nebengruppe des Periodensystems der Elemente verwendbar. Derartige Komplexe können als Co-Katalysatoren bei Hydroformulierungen eingesetzt werden. Geeignete Umsetzungsbedingungen sind in der DE-A 196 21 967 und in DE-A-197 43 197 beschrieben.

Die Erfindung wird nachstehend anhand von Beispielen näher erläutert:

### Beispiele

### Beispiel 1

Ein Autoklav (Inhalt: 300 ml; Material: HC) wurde mit 2,6-Bis(2,4-dimethylphenyl)-4-phenylpyryliumtetrafluoroborat (20 g) und n-Butanol (150 ml) befüllt und mit 5 bar Stickstoff abgepresst. Der Gasraum wurde anschließend mit PH₃ gespült. Es wurden 5 bar PH₃ bei Raumtemperatur aufgepresst und mit PH₃ nachgepresst, bis der Druck bei 5 bar konstant blieb. Das Reaktionsgemisch wurde auf 110°C erhitzt, und die Lösung wurde mit einem Begasungsrührer kräftig gerührt. Es wurde PH₃ bis zu einem Druck von 30 bar nachgepresst. Während der Reaktion wurde der Druck im Reaktor durch Nachpressen über einen Druckregler auf dem gewünschten Druckniveau gehalten. Nach einer Reaktionszeit von 4 h wurde der Autoklav abgekühlt, entspannt, mit Stickstoff unter Rühren gründlich ausgegast und ausgebaut. Der Autoklavenaustrag wurde im Vakuum auf das halbe Volumen eingeengt. Der dabei ausgefallene Feststoff wurde abgesaugt, mit n-Butanol gewaschen und anschließend in Toluol gelöst. Die tuluolische Lösung wurde dann solange mit Wasser gewaschen, bis die wässrige Phase neutral war. Nach Entfernen des Lösungsmittels und Waschen mit wenig n-Pentan wurde der Rückstand in 250 ml Diethylether/Methanol (3:2) gelöst. Die erhaltene Lösung wurde bei 30°C und 170 mbar solange eingeengt, bis ein weißer Feststoff ausfiel. Der Feststoff wurde abgesaugt, mit wenig Methanol und n-Pentan gewaschen und anschließend im Hochvakuum getrocknet. Ausbeute: 8.9 g (53%).

### Allgemeine Versuchsbeschreibung zur Herstellung von Phosphabenzolen

Alle folgenden Versuche (diskontinuierlich) wurden in einem 300 ml Autoklav . (Material: HC) durchgeführt. Der Autoklav wurde mit Pyryliumsalz und einem geeigneten Lösungsmittel befüllt und mit 5 bar Stickstoff abgepresst. Der Gasraum wurde anschließend mit PH₃ gespült. Es wurden 5 bar PH₃ bei Raumtemperatur aufgepresst und mit PH₃ nachgepresst, bis der Druck bei 5 bar konstant blieb. Das Reaktionsgemisch wurde auf 110°C erhitzt, und die Lösung wurde mit einem Begasungsrührer kräftig gerührt. Es wurde PH₃ bis zu einem Druck von 30 bar nachgepresst. Während der Reaktion wurde der Druck im Reaktor durch Nachpressen über einen Druckregler auf dem gewünschten Druckniveau gehalten. Nach einer Reaktionszeit von 4 h wurde der Autoklav abgekühlt, entspannt, mit Stickstoff unter Rühren gründlich ausgegast und ausgebaut. Der Autoklavenaustrag wurde dann wie nachstehend beschrieben aufgearbeitet.

### Beispiel 2a

### Herstellung von 2,6-Bis(2,4-dimethylphenyl)-4-phenylpyryliumtetrafluoroborat

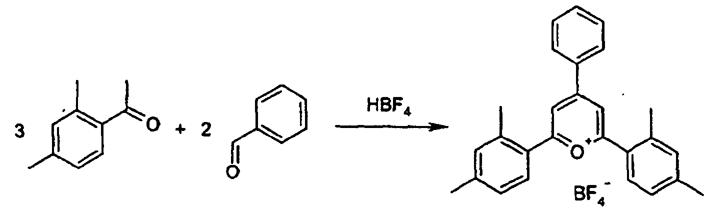

271 g (2.6 mol) Benzaldehyd und 542 g (3.7 mol) 2,4-Dimethylacetophenon wurden in 400 ml 1,2-Dichlorethan gelöst und auf 80°C erwärmt. Hierzu tropfte man langsam unter Rühren 606 g (3.7 mol) einer 54%igen etherischen Tetrafluoroborsäure-Lösung. Anschließend rührte man bei dieser Temperatur weitere 4 h nach und ließ dann auf Raumtemperatur abkühlen. Die flüchtigen Bestandteile der erhaltenen tiefroten Lösung wurden im Hochvakuum unter leichtem Erwärmen abdestilliert. Der Rückstand wurde mit einem Toluol/Wasser-Gemisch (1:1) versetzt. Der ausgefallene, orangegelbe Feststoff wird abfiltriert, mit Wasser und Toluol gewaschen und im Hochvakuum getrocknet. Zum Umkristallisieren wurde der Feststoff in Methanol suspendiert und anschließend solange mit Dichlormethan versetzt, bis eine klare Lösung vorlag. Unter leichtem Erwärmen wurde das Lösungsmittel im Hochvakuum abdestilliert, bis erneut Feststoff ausfiel. Das Produkt wurde abfiltriert, nacheinander mit Methanol und n-Pentan gewaschen und anschließend im Hochvakuum getrocknet. Ausbeute: 180 g (32%) hellgelber Feststoff.

### Beispiel 2b

### Herstellung von 2,6-Bis(2,4-dimethylphenyl)-4-phenylphosphabenzol

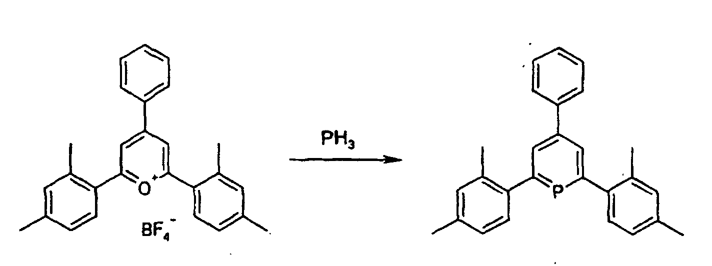

Es wurden 20 g (44 mmol) 2,6-Bis(2,4-dimethylphenyl)-4-phenylpyryliumtetrafluoroborat in 150 ml *n*-Butanol eingesetzt. Der nach der Umsetzung mit PH₃ erhaltene Autoklavenaustrag wurde im Vakuum zur Hälfte eingeengt. Der dabei ausgefallene Feststoff wurde abgesaugt, mit *n*-Butanol gewaschen und anschließend in Toluol gelöst. Die toluolische Lösung wurde dann solange mit Wasser gewaschen, bis die wässrige Phase neutral war. Nach Entfernen des Lösungsmittels und Waschen mit wenig n-Pentan wurde der Rückstand in 250 ml Diethylether/Methanol (3:2) gelöst. Die erhaltene Lösung wurde bei ca. 30°C im Vakuum solange eingeengt, bis ein Feststoff ausfiel. Der Feststoff wurde abgesaugt, mit wenig Methanol und n-Pentan gewaschen und anschließend im Hochvakuum getrocknet. Ausbeute: 8.9 g (53%) weißer Feststoff.

### Vergleichsbeispiel 2b

Die Umsetzung wurde analog Beispiel 2b durchgeführt, jedoch unter Zusatz von 1 ml einer 30%igen HBr-Lösung in Essigsäure bei der Umsetzung mit PH₃. Es wurde analog Beispiel 2b aufgearbeitet. Ausbeute: 8.9 g (53%).

### Beispiel 3a

### Herstellung von 2,3,5,6-Tetraphenylpyryliumtetrafluoroborat

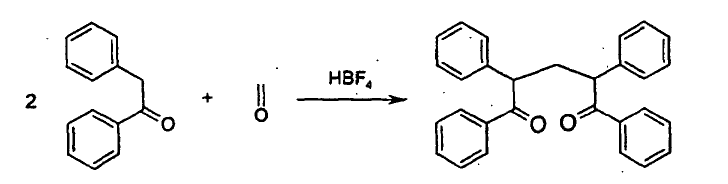

1. Stufe: 40 g (0.20 mol) Desoxybenzoin wurden in 100 ml Ethanol gelöst. Hierzu gab unter Rühren 10.2 g (0.10 mol) einer 30%igen wässrigen Formaldehydlösung und anschließend 12.2 g (0.22 mol) Kaliumhydroxid, gelöst in einem Gemisch aus 7 ml Wasser und 150 ml Ethanol. Nach 2 h wurde der angefallene Feststoff abfiltriert, mit wenig *n*-Pentan gewaschen und dann in 300 ml eines Gemisches aus Dichlormethan/Ethanol (2:1) gelöst. Unter leichtem erwärmen wurde das Lösungsmittel im Hochvakuum abdestilliert, bis erneut Feststoff ausfiel. Das Produkt wurde abfiltriert, mit *n*-Pentan gewaschen und anschließend im Hochvakuum getrocknet. Ausbeute: 38 g (90%) weißer Feststoff 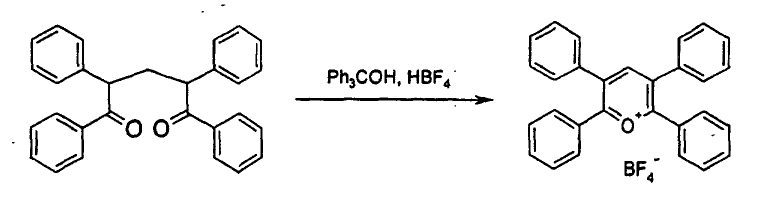
2. Stufe: Zu einer. Lösung von 1.0 g (2.4 mmol) 1,2,4,5-Tetraphenyl-1,5-pentandion in 20 ml Essigsäureanhydrid gab man unter Rühren eine Lösung von 0.70 g (2.7 mmol) Triphenylmethanol in 10 ml Essigsäureanhydrid. Das Reaktionsgemisch wurde auf 50°C erwärmt. Hierzu tropfte man langsam unter Rühren 0.88 g (5.4 mol) einer 54%igen etherische Tetrafluoroborsäure-Lösung, welche mit 5 ml Essigsäureanhydrid verdünnt wurde. Anschließend rührte man noch weitere 4 h bei 80°C nach, und ließ dann auf Raumtemperatur abkühlen. Der nach Zugabe von 10 ml Diethylether entstandene Feststoff wurde abfiltriert. Die Mutterlauge wurde im Vakuum vollständig eingeengt und dann mit 40 ml eines Toluol/Wasser-Gemisches (1:1) versetzt. Der ausgefallene Feststoff wurde abfiltriert und mit wenig *n*-Pentan gewaschen. Zum Umkristallisieren der gesammelten Feststoffe wurden diese in ca. 30 ml Methanol suspendiert und anschließend solange mit Dichlormethan (ca. 50 ml) versetzt, bis eine klare Lösung vorlag. Unter leichtem Erwärmen wurde das Lösungsmittel im Hochvakuum abdestilliert, bis erneut Feststoff ausfiel. Das Produkt wird abfiltriert, mit wenig *n*-Pentan gewaschen und anschließend im Hochvakuum getrocknet. Ausbeute: 0.6 g (53%) hellgelber Feststoff.

### Beispiel 3b

### Herstellung von 2,3,5,6-Tetraphenylphosphabenzol

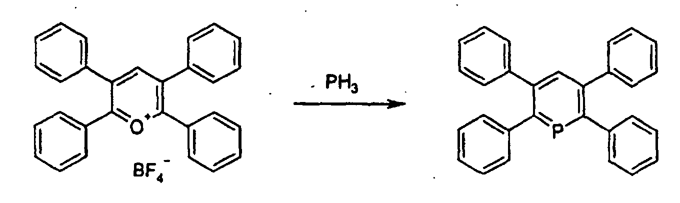

Es wurden 1.3 g (2.8 mmol) 2,3,5,6-Tetraphenylpyryliumtetrafluoroborat in 150 ml n-Butanol eingesetzt. Der nach der Umsetzung mit PH₃ erhaltene Autoklavenaustrag wurde bei ca. 80°C im Vakuum auf ein Drittel eingeengt. Der dabei ausgefallene Feststoff wurde abgesaugt, mit *n*-Butanol gewaschen und anschließend in Toluol gelöst. Die toluolische Lösung wurde dann solange mit Wasser gewaschen, bis die wässrige Phase neutral war. Nach Entfernen des Lösungsmittels wurde der Rückstand in einem Gemisch aus Dichlormethan und Methanol gelöst. Die erhaltene Lösung wurde bei ca. 50°C im Vakuum solange eingeengt, bis ein Feststoff ausfiel. Der Feststoff wurde abgesaugt, mit wenig *n*-Pentan gewaschen und anschließend im Hochvakuum getrocknet. Ausbeute: 0.8 g (71%) weißer Feststoff.

### Vergleichsbeispiel 3b

Die Umsetzung wurde ausgehend von 1.0 g (2.1 mmol) 2,3,5,6-Tetraphenylpyryliumtetrafluoroborat analog Beispiel 3b durchgeführt, jedoch unter Zusatz von 1 ml einer 30%igen HBr-Lösung in Essigsäure bei der Umsetzung mit PH₃. Es wurde analog Beispiel 3b aufgearbeitet. Ausbeute: 0.3 g (35%).

### Beispiel 4

### Herstellung von 2,6-Bis(2-methyphenyl)-4-phenylphosphabenzol

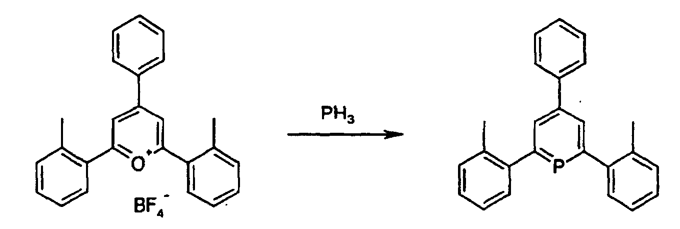

Es wurden zwei mal je 15 g (35 mmol) 2,6-Bis(2-methylphenyl)-4-phenylpyryliumtetrafluoroborat in 150 ml n-Butanol eingesetzt. Die beiden nach der Umsetzung mit PH₃ erhaltenen Autoklavenausträge wurden vereinigt und bei ca. 80°C im Vakuum bis auf ca. 50 ml eingeengt. Der dabei ausgefallene Feststoff wurde abgesaugt, mit *n*-Pentan gewaschen und anschließend in Toluol gelöst. Die toluolische Lösung wurde dann solange mit Wasser gewaschen, bis die wässrige Phase neutral war. Nach Entfernen des Lösungsmittels wurde der Rückstand in Methanol suspendiert und dann solange mit Dichlormethan versetzt, bis der Feststoff vollständig gelöst war. Die erhaltene Lösung wurde bei ca. 40°C im Vakuum solange eingeengt, bis ein Feststoff ausfiel. Der Feststoff wurde abgesaugt, mit wenig *n*-Pentan gewaschen und anschließend im Hochvakuum getrocknet. Ausbeute: 15.6 g (63%) weißer Feststoff.

### Beispiel 5

### Herstellung von 2,6-Bis(2,4,5-trimethylphenyl)-4-phenylphosphabenzol

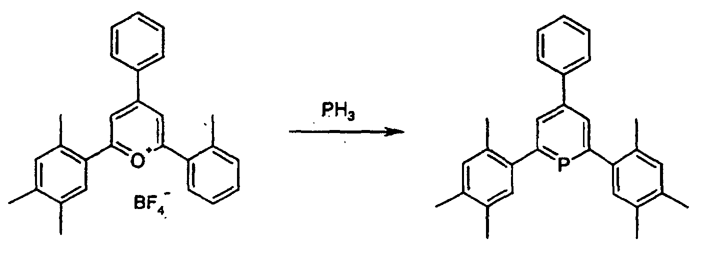

Es wurden 2.1 g (4.4 mmol) 2,6-Bis(2,4,5-trimethylphenyl)-4-phenylpyryliumtetrafluoroborat in 150 ml n-Butanol eingesetzt. Der nach der Umsetzung mit PH₃ erhaltene Autoklavenaustrag wurde bei ca. 80°C im Vakuum bis auf ca. 50 ml eingeengt. Der dabei ausgefallene Feststoff wurde abgesaugt, mit *n*-Pentan gewaschen und anschließend in Toluol gelöst. Die toluolische Lösung wurde dann solange mit Wasser gewaschen, bis die wässrige Phase neutral war. Nach Entfernen des Lösungsmittels und Waschen mit wenig *n*-Pentan wurde der Rückstand in Dichlormethan gelöst. Die erhaltene Lösung wurde mit Methanol verdünnt und dann bei 30°C im Vakuum solange eingeengt, bis ein Feststoff ausfiel. Der Feststoff wurde abgesaugt, mit wenig *n*-Pentan gewaschen und anschließend im Hochvakuum getrocknet. Ausbeute: 0.8 g (45%) hellgelber Feststoff.

### Beispiel 6

### Herstellung von 10-Phenyl-1,2,7,8-dibenzo-3,4,5,6-tetrahydro-9-phosphaanthracen

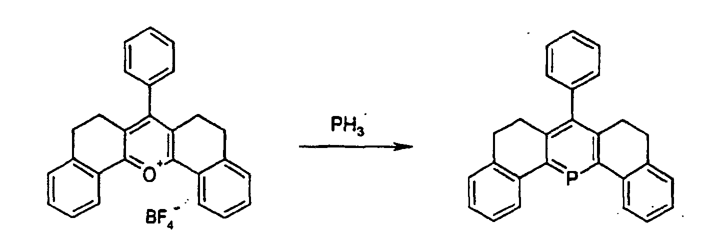

Es wurden 3.5 g (7.8 mmol) 10-Phenyl-1,2,7,8-dibenzo-3,4,5,6-tetrahydro-9-oxoniaanthracentetrafluoroborat in 150 ml Ethanol eingesetzt. Der nach der Umsetzung mit PH₃ erhaltene Autoklavenaustrag wurde bei ca. 80°C im Vakuum von flüchtigen Bestandteilen befreit. Der orangefarbene Rückstand wurde in ca. 200 ml warmem Toluol suspendiert und sofort über eine Fritte filtriert. Die toluolische Lösung wurde dann solange mit Wasser gewaschen, bis die wässrige Phase neutral war. Nach Entfernen des Lösungsmittels bei 80°C im Vakuum wurde der verbleibende Feststoff in ca. 30 ml Methanol und ca. 200 ml Dichlormethan gelöst und dann bei 50°C im Vakuum langsam solange eingeengt, bis ein Feststoff ausfiel. Der Feststoff wurde abgesaugt, mit wenig *n*-Pentan. gewaschen und anschließend im Hochvakuum getrocknet. Ausbeute: 0.7 g (24%) hellgelber Feststoff.

## Patentansprüche

1. Verfahren zur Herstellung von Phosphabenzolverbindungen der allgemeinen Formeln I und II 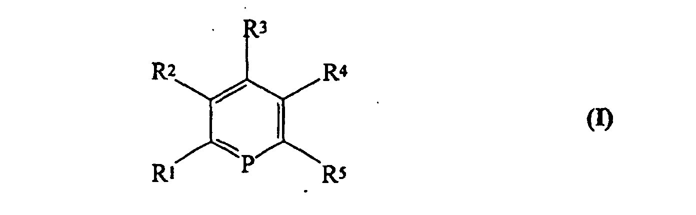 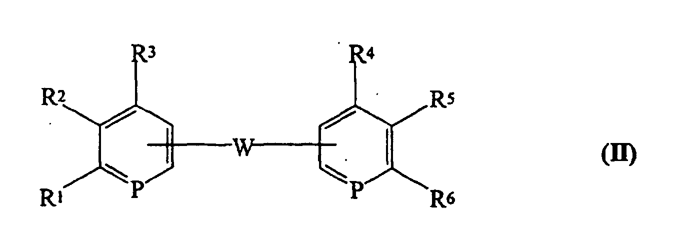 in denen R¹ bis R⁶ unabhängig voneinander für Wasserstoff, COOM, SO₃M, NR₃X, NR₂, OR, COOR oder SR (mit M = Wasserstoff, NH₄ oder Alkalimetall, X = Anion, R = Wasserstoff oder C₁₋₆-Alkyl) oder für C₁₋₁₂-Alkyl, C₆₋₁₂-Aryl, C₇₋₁₂-Aralkyl, C₇₋₁₂Alkaryl oder C₃₋₆-Heterocycloalkyl mit 1 bis 3 Heteroatomen stehen, die mit den vorstehenden Resten substituiert sein können, wobei auch zwei oder mehrere der Reste zu aliphatischen annellierten Ringen verbunden sein können,
und
W eine Brücke aus einer kovalenten Bindung, einer Oxogruppe, einer Schwefelgruppe, einer Aminogruppe, einer Di-C₁₋₆-alkylsiliziumgruppe oder einem C₁₋₁₆-Rest bedeutet, der Bestandteil einer oder mehrerer verknüpfter cyclischer oder aromatischer Kerne sein kann und durch 1 bis 3 Heteroatome unterbrochen sein kann, wobei die jeweils nicht an die Brücke gebundene o- oder m-Position der Phosphabenzolkerne einen der Reste R¹ bis R⁶ tragen kann,
durch Umsetzung entsprechender Pyryliumsalze mit PH₃ in Anwesenheit oder Abwesenheit eines Löse- oder Verdünnungsmittels, **dadurch gekennzeichnet, daß** die Pyryliumsalze mit PH₃ bei einer Temperatur oberhalb von 0°C zusammengebracht und bei einer Temperatur von 0°C bis 200°C und einem Druck von oberhalb 1 bar ohne Zusatz eines Säurekatalysators oder einer Base umgesetzt werden.

2. Verfahren nach Anspruch 1, **dadurch gekennzeichnet, daß** die Umsetzung bei einem PH₃-Partialdruck im Bereich von 0,1 bis 100 bar erfolgt.

3. Verfahren nach Anspruch 1 oder 2, **dadurch gekennzeichnet, daß** die Umsetzung bei einem Druck von 5 bis 35 bar erfolgt.

4. Verfahren nach einem der Ansprüche 1 bis 3, **dadurch gekennzeichnet, daß** während der Umsetzung PH₃ in das Reaktionsgemisch eingeleitet wird, um den PH₃-Partialdruck im wesentlichen konstant zu halten.

5. Verfahren nach einem der Ansprüche 1 bis 4, **dadurch gekennzeichnet, daß** die Pyryliumsalze bei Umgebungstemperatur mit PH₃ zusammengebracht werden, und das so erhaltene Gemisch zur Umsetzung auf eine Temperatur im Bereich von 110 bis 130°C erhitzt wird.

6. Verfahren nach einem der Ansprüche 1 bis 5, **dadurch gekennzeichnet, daß** die Verbindungen der allgemeinen Formeln I und II als Reste R¹ bis R⁶ Phenylreste oder Benzylreste aufweisen, die durch SO₃M substituiert sein können.

7. Verfahren nach einem der Ansprüche 1 bis 6, **dadurch gekennzeichnet, daß** die Pyryliumsalze Tetrafluorborate, Perchlorate, Hydrogensulfate, Bromide, Iodide oder Gemische davon sind.

8. Verfahren nach einem der Ansprüche 1 bis 7, **dadurch gekennzeichnet, daß** nach der Umsetzung das Reaktionsgemisch entspannt und gegebenenfalls mit einem Inertgas gespült wird, wobei die aus dem Reaktionsgemisch ausgetretenen Gase zur Abtrennung von nicht umgesetztem PH₃ in flüssiger Form gekühlt und durch einen Abscheider geführt werden, und das abgetrennte PH₃, in die Umsetzung zurückgeführt wird.

9. Verfahren nach einem der Ansprüche 1 bis 8, **dadurch gekennzeichnet, daß** aus dem erhaltenen Produktgemisch durch wäßrige Extraktionen die dem Anion des Pyryliumsalzes entsprechende freie Säure abgetrennt und in die Herstellung des Pyryliumsalzes zurückgeführt wird.

## Claims

1. A process for preparing phosphabenzene compounds of the formulae I and II 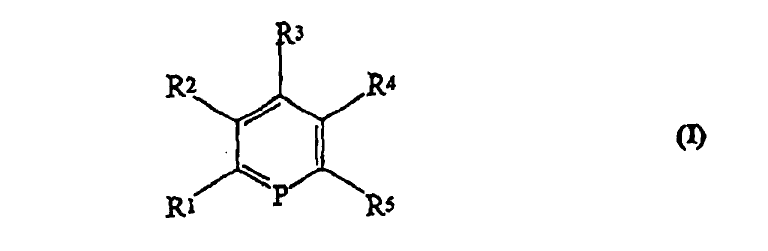 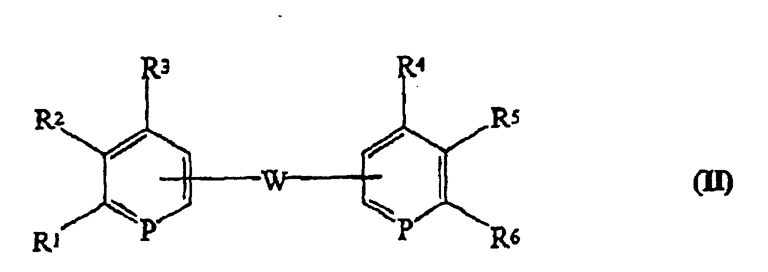 where R¹ to R⁶ are, independently of one another, hydrogen, COOM, SO₃M, NR₃X, NR₂, OR, COOR or SR (where M = hydrogen, NH₄ or alkali metal, X = an anion, R = hydrogen or C₁₋₆-alkyl) or C₁₋₁₂-alkyl, C₆₋₁₂-aryl, C₇₋₁₂-aralkyl, C₇₋₁₂-alkaryl or C₃₋₆-heterocycloalkyl having from 1 to 3 heteroatoms which may be substituted by the above radicals, where two or more of the radicals may also be joined to form aliphatic fused-on rings,
and
W is a bridge comprising a covalent bond, an oxo group, a sulfur group, an amino group, a di-C₁₋₆-alkylsilicon group or a C₁₋₁₆-radical which may be a constituent of one or more linked cyclic or aromatic rings and may be interrupted by from 1 to 3 heteroatoms, where the o or m position of the phosphabenzene ring which is not bound to the bridge may in each case bear one of the radicals R¹ to R⁶,
by reacting corresponding pyrylium salts with PH₃ in the presence or absence of a solvent or diluent, wherein the pyrylium salts are combined with PH₃ at above 0°C and are reacted at a temperature in the range from 0°C to 200°C and a pressure above 1 bar without addition of an acid catalyst or a base.

2. A process as claimed in claim 1, wherein the reaction is carried out at a PH₃ partial pressure in the range from 0.1 to 100 bar.

3. A process as claimed in claim 1 or 2, wherein the reaction is carried out at a pressure of from 5 to 35 bar.

4. A process as claimed in any of claims 1 to 3, wherein PH₃ is passed into the reaction mixture during the reaction in order to keep the PH₃ partial pressure essentially constant.

5. A process as claimed in any of claims 1 to 4, wherein the pyrylium salts are combined with PH₃ at ambient temperature and the mixture obtained in this way is reacted by heating to a temperature in the range from 110 to 130°C.

6. A process as claimed in any of claims 1 to 5, wherein the compounds of the formulae I and II bear, as radicals R¹ to R⁶, phenyl radicals or benzyl radicals which may be substituted by SO₃M.

7. A process as claimed in any of claims 1 to 6, wherein the pyrylium salts are tetrafluoroborates, perchlorates, hydrogensulfates, bromides, iodides or mixtures thereof.

8. A process as claimed in any of claims 1 to 7, wherein, after the reaction, the reaction mixture is depressurized and, if desired, purged with an inert gas, the gases carried from the reaction mixture are cooled and passed through a separator to separate off unreacted PH₃ in liquid form and the PH₃ separated off is returned to the reaction.

9. A process as claimed in any of claims 1 to 8, wherein the free acid corresponding to the anion of the pyrylium salt is separated from the resulting product mixture by aqueous extraction and is returned to the preparation of the pyrylium salt.

## Revendications

1. Procédé de préparation de composés de phosphabenzène des formules générales I et II 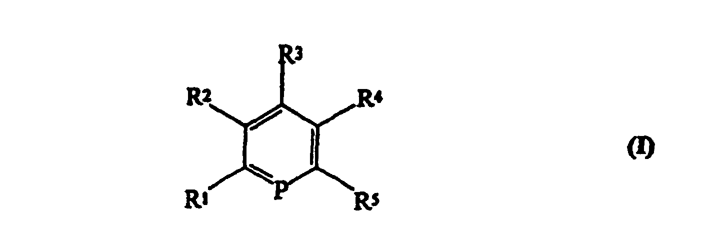 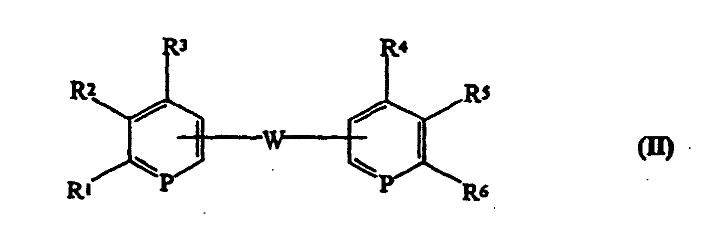 dans lesquelles R¹ à R⁶ représentent, indépendamment les uns des autres, de l'hydrogène, COOM, SO₃M, NR₃X, NR₂, OR, COOR ou SR (avec M = hydrogène, NH₄ ou un métal alcalin, X = anion, R = hydrogène ou radical alkyle en C₁₋₆) ou un radical alkyle en C₁₋₁₂, aryle en C₆₋₁₂, aralkyle en C₇₋₁₂, alkaryle en C₇₋₁₂ ou hétérocycloalkyle en C₃₋₆ comportant de 1 à 3 atomes de carbone, qui peuvent être substitués par les restes précités, où également deux ou plus de deux des restes peuvent être liés à des cycles aliphatiques annélés,
et
W représente un pont constitué d'une liaison covalente, un groupe oxo, un groupe soufre, un groupe amino, un groupe di-alkyl(C₁₋₆)silicium ou un reste en C₁₋₁₆, qui peut être constituant d'un ou plusieurs noyaux cycliques ou aromatiques liés et peut être interrompu par 1 à 3 hétéroatomes, où à chaque fois la position ortho ou méta du noyau de phosphabenzène non liée au pont peut porter l'un des restes R¹ à R⁶,
par réaction de sels de pyrylium correspondants avec PH₃ en présence ou en l'absence d'un solvant ou d'un diluant, **caractérisé en ce que** l'on met en présence les sels de pyrylium avec PH₃ à une température supérieure à 0°C et qu'on les fait réagir à une température de 0°C à 200°C et une pression de plus de 1 bar, sans addition d'un catalyseur acide ou d'une base.

2. Procédé selon la revendication 1, **caractérisé en ce que** la réaction a lieu à une pression partielle de PH₃ de l'ordre de 0,1 à 100 bar.

3. Procédé selon la revendication 1 ou 2, **caractérisé en ce que** la réaction est entreprise à une pression de 5 à 35 bar.

4. Procédé selon l'une des revendications 1 à 3, **caractérisé en ce que**, pendant la réaction, on introduit du PH₃ dans le mélange réactionnel, afin de maintenir essentiellement constante la pression partielle de PH₃.

5. Procédé selon l'une des revendications 1 à 4, **caractérisé en ce que** les sels de pyrylium sont mis en présence du PH₃ à température ambiante, et que le mélange ainsi obtenu est chauffé aux fins de réaction à une température de l'ordre de 110 à 130°C.

6. Procédé selon l'une des revendications 1 à 5, **caractérisé en ce que** les composés des formules générales I et II présentent, comme restes R¹ à R⁶, des restes phényle ou des restes benzyle, qui peuvent être substitués par SO₃M.

7. Procédé selon l'une des revendications 1 à 6, **caractérisé en ce que** les sels de pyrylium sont des tétrafluoroborates, des perchlorates, des hydrogénosulfates, des bromures, des iodures ou leurs mélanges.

8. Procédé selon l'une des revendications 1 à 7, **caractérisé en ce que**, après la réaction, le mélange réactionnel est détendu et éventuellement rincé au moyen d'un gaz inerte, et les gaz qui quittent le mélange réactionnel sont refroidis sous forme liquide aux fins de séparation de la PH₃ non convertie et envoyés dans un séparateur, et que la PH₃ séparée est recyclée dans la réaction.

9. Procédé selon l'une des revendications 1 à 8, **caractérisé en ce qu'**à partir du mélange de produits obtenus, on sépare par extractions aqueuses l'acide libre correspondant à l'anion du sel de pyrylium et qu'on le recycle dans la préparation du sel de pyrylium.
